# EUROPEAN PATENT APPLICATION

(11) **EP 1 258 869 A1**
(43) Date of publication of application: **20.11.2002**
(21) Application number: 00978066.9
(22) Date of filing: 01.12.2000
(51) Int. Cl.: G11B 7/08, G11B 19/20

(54) **DISK REPRODUCING DEVICE**

(30) Priority: 17.12.1999 JP 35974199
(71) Applicant: KABUSHIKI KAISHA KENWOOD, Shibuya-ku Tokyo 150-8501 (JP)
(72) Inventor: TANAKA, Hisaki, Hino-shi, Tokyo 191-0012 (JP)
(74) Representative: Patentanwälte Leinweber & Zimmermann
(86) International application number: JP0008536
(87) International publication number: WO01045097

(57) **Abstract**

The invention provides a disk reproducing apparatus capable of easily adjusting the inclination angle of the optical axis of an objective lens and the position of a motion locus of the optical axis. In order to make the optical axis of an objective lens (4) vertical to the record surface of a disk placed on a turntable (3), the rotation degrees of a radial skew adjusting screw (14) and a tangential skew adjusting screw are adjusted. In order to remove an R-dependence displacement, an adjustment jig gear (12) is rotated to rotate a holder (7) engaged via a rack gear part (7b) by using a holder boss (7a) as a fulcrum and move a pickup (4) supported by the holder (7).

## Description

### TECHNICAL FIELD

The present invention relates to a disk reproducing apparatus capable of easily adjusting the inclination angle of the optical axis of an objective lens and the position of a motion locus of the optical axis.

### BACKGBOUND ART

As music CD's (compact disks) are used widely, disk reproducing apparatuses, typically CD players, are prevailing as one type of popular music reproducing apparatuses. With a disk reproducing apparatus, a laser beam generated in a pickup is applied to the record surface of a disk via an objective lens, light reflected from the disk is converged to a light detector via the same objective lens to thereby read information recorded in the disk.

The optical axis of the objective lens of such a laser disk reproducing apparatus is adjusted beforehand to be vertical to the disk record surface in order to correctly apply a laser beam to a target track on the disk record surface and in order to correctly converge light reflected from the disk to the light detector at a predetermined position. More specifically, the disk reproducing apparatus is equipped with an optical axis adjusting mechanism capable of adjusting the inclination angle of the optical axis of the objective lens. At a product inspection time or the like, an inspector adjusts the optical axis by using the optical axis adjusting mechanism.

The optical axis adjusting mechanism is broadly classified into any one of the following types. In any type of the optical axis adjusting mechanism, a z-axis and a y-axis are adjusted to maintain a z-axis vertical to the disk record surface, where the z-axis is defined as the optical axis direction of an objective lens, the y-axis is defined as the motion locus direction of the optical axis (the radial direction of a disk) and the x-axis is defined as the direction perpendicular to the z- and y-axes (a tangential direction of a track). The y-axis adjustment angle necessary for maintaining the z-axis vertical to the disk record surface is hereinafter called a radial skew, whereas the x-axis adjustment angle necessary for maintaining the z-axis vertical to the disk record surface is called a tangential skew.

A mechanism of a first type adjusts the inclination angle of the optical axis of an objective lens by adjusting the inclination of a pickup holder or the like for holding a pickup. Namely, with this mechanism, the optical axis of the objective lens is adjusted to be vertical to the disk record surface by using the pickup holder or the like without moving the disk record surface (turntable) side.

A mechanism of a second type adjusts the inclination angle of the optical axis of an objective lens by adjusting the inclination of a drive motor or the like for driving and supporting a turntable. Namely, with this mechanism, the optical axis of the objective lens is adjusted to be vertical to the disk record surface by adjusting the disk mounting turntable side without moving the objective lens optical axis (pickup) side.

The optical axis of an objective lens of a disk reproducing apparatus is adjusted by the optical axis adjusting mechanism of one of the above-described two types.

In the case of a disk reproducing apparatus which performs a tracking control by a three-beam method and in a disk reproducing apparatus adopting a multi-beam method of reading signals at the same time from a plurality of record tracks by using a plurality of spots, the motion locus (on an extended line) of an objective lens optical axis and the center of the disk are adjusted beforehand to be coincident. For example, in the case of a disk reproducing apparatus adopting the multi-beam method, the extended line of the motion locus of the objective lens optical axis is adjusted to superpose upon the center of the turntable in order that the pitch between spots and the pitch between tracks are not displaced when a plurality of spots are moved in parallel along the feed direction of the pickup.

Such disk reproducing apparatuses are equipped with a position adjusting mechanism capable of adjusting the position of a motion locus of an objective lens optical axis. An inspector adjusts so as to eliminate an R dependence which indicates a displacement between the motion locus (on the extended line) of the objective lens optical axis and the center of the turntable.

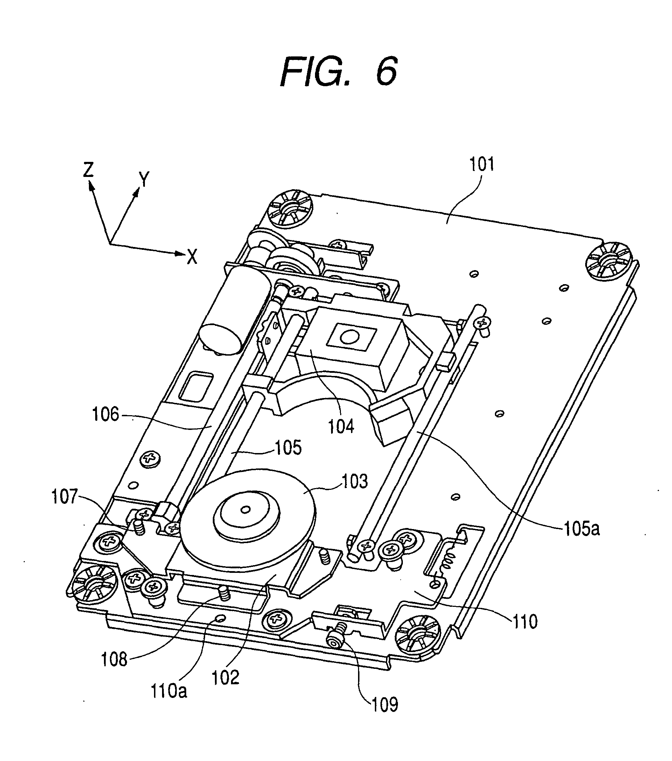

With reference to Fig. 6, a conventional disk reproducing apparatus will be described which is equipped with the above-described optical axis adjusting mechanism and motion locus position adjusting mechanism.

Fig. 6 is a perspective view showing the structure of a main part of a conventional disk reproducing apparatus. The disk reproducing apparatus shown in Fig. 6 has: a chassis 101; a bracket 102 for holding an unrepresented disk motor; a turntable 103 supported by a shaft of a disk motor; a pickup 104 with an objective lens: a main rod 105 for movably holding the pickup 104; a lead screw 106 for driving the pickup 104; skew adjusting screws 107 and 108 for adjusting the inclination of the bracket 102; and an R-dependence adjusting screw 109 for adjusting the inclination (inclination relative to a fulcrum at a fulcrum axis 110a in the X-Y plane) of an R-dependence adjusting base 110 for holding the bracket 102.

In the disk reproducing apparatus shown in Fig. 6, the radial skew and tangential skew of the turntable 103 are adjusted by moving the bracket 102 by the skew adjusting screws 107 and 108. Namely, as the skew adjusting screws 107 and 108 are rotated, the inclination angle of the bracket 102 is changed to adjust the radial skew and tangential skew of the turntable 103.

The R-dependence is adjusted by rotating the turntable 103 by using the R-dependence adjusting screw 109. Namely, as the R-dependence adjusting screw 109 is rotated, the R-dependence adjusting base 110 is rotated by using the fulcrum axis 110a as a rotation fulcrum to move the turntable 103 and adjust the R-dependence.

By using the optical axis adjusting mechanism and motion locus position adjusting mechanism of a disk reproducing apparatus, the inclination angle of an objective lens optical axis and the position of an objective lens optical axis motion locus can be adjusted.

The conventional disk reproducing apparatus shown in Fig. 6 is, however, associated with the problem that since the skew adjustment and R-dependence adjustment are preformed on the R-dependence adjustment base 110, both the adjustments are influenced on each other.

For example, after the radial skew and tangential skew are adjusted by rotating the skew adjusting screws 107 and 108, if the R-dependence is adjusted by rotating the R-dependence adjusting screw 109, a new displacement of the radial skew and tangential skew is generated.

It is therefore necessary to perform the skew adjustment again and it takes a fairly long time to adjust. Since the optical axis adjusting mechanism and motion locus position adjustment mechanism are superposed, the structure of the disk reproducing apparatus becomes complicated.

The present invention has been made in consideration of the above-described circumstances, and it is an object of the present invention to provide a disk reproducing apparatus capable of easily adjusting the inclination angle of the optical axis of an objective lens and the position of a motion locus of the optical axis.

### DISCLOSUBE OF THE INVENTION

In order to achieve the above object, a disk reproducing apparatus of the invention comprises: a first holder fixed to a chassis for holding a drive motor whose rotary shaft is coupled to a turntable on which a disk is placed; first inclination adjusting means for adjusting an inclination of the turntable coupled to the rotary shaft of the drive motor held by the first holder, along a first direction relative to the chassis; second inclination adjusting means for adjusting an inclination of the turntable along a second direction having a predetermined relation to the first direction; a second holder fixed to the chassis for movably supporting a pickup; and third inclination adjusting means for adjusting an inclination of the pickup supported by the second holder along a direction in a plane of the chassis.

According to the invention, the first holder is fixed to the chassis and holds the drive motor whose rotary shaft is coupled to the turntable on which a disk is placed. The first inclination adjusting means includes, for example, an adjusting screw, and adjusts the inclination of the turntable coupled to the rotary shaft of the drive motor held by the first holder, along the first direction relative to the chassis. The second inclination adjusting means includes, for example, an adjusting screw, and adjusts the inclination of the turntable along the second direction having the predetermined relation to the first direction. The second holder is fixed to the chassis and movably supports the pickup. The third inclination adjusting means includes, for example, an adjusting gear, and adjusts the inclination of the pickup supported by the second holder along a direction in a plane of the chassis. The first holder is adjusted by the first and second inclination adjusting means to adjust the radial skew and tangential skew of the turntable, and the second holder is adjusted by the third inclination adjusting means to adjust the R-dependence between the motion locus of the pickup and the turntable. Since the first and second holders are adjusted independently, both the adjustments are not influenced each other. It is therefore possible to easily adjust the inclination angle of the optical axis of an objective lens and the position of a motion locus of the optical axis.

The first and second holders may be independently mounted on the chassis. In this case, since the first and second holders are adjusted independently and fixed to the chassis, both the adjustments are not influenced on each other. It is therefore possible to easily adjust the inclination angle of the optical axis of an objective lens and the position of a motion locus of the optical axis.

The first inclination adjusting means may include a radial skew adjusting screw for fixing the first holder to the chassis in an adjusted state of a radial skew of the turntable, and the second inclination adjusting means may include a tangential skew adjusting screw for fixing the first holder to the chassis in an adjusted state of a tangential skew of the turntable.

The second holder may further comprise guiding means for guiding a motion of the pickup along a predetermined direction and pickup moving means for moving the pickup along the guiding means, and the third inclination adjusting means may adjust an inclination of the pickup in cooperation with the guiding means and pickup moving means. In this case, since the inclination of the pickup is adjusted while the guiding means and the pickup moving means of the second holder are maintained in parallel, the motion of the pickup is not influenced. It is therefore possible to easily adjust the inclination angle of the optical axis of an objective lens and the position of a motion locus of the optical axis.

The third inclination adjusting means may include an R-dependence adjustment gear engaging with a rack gear formed with the second holder mounted on said second holder, in a state that the center of the turntable is superposed upon an extended line of a motion locus of an optical axis of the pickup.

The guiding means may include rods for guiding a linear reciprocal motion of the pickup, and the pickup moving means may include a drive motor and a lead screw coupled to a rotary shaft of the drive motor and engaged with a rack gear mounted on the pickup.

The third inclination adjusting means may include an R-dependence adjustment gear engaging with a projection disposed on the second holder at a predetermined position, in a state that the center of the turntable is superposed upon an extended line of a motion locus of an optical axis of the pickup.

### BRIEF DESCRIPTION OF THE DRAWINGS

Fig. 1A is a perspective view showing the structure of a main part of a disk reproducing apparatus according to a first embodiment of the invention, and Fig. 1B is a schematic cross sectional view of a support unit for a pickup 4.
Fig. 2A is a side view of the Y-Z plane of a turntable or the like illustrating the radial skew adjustment, and Fig. 2B is a side view of the X-Z plane of a turntable or the like illustrating the tangential skew adjustment.
Fig. 3 is a schematic diagram illustrating an R-dependence.
Fig. 4 is a schematic diagram illustrating how a holder is rotated by rotating an adjustment jig gear.
Fig. 5A is a perspective view showing the structure of a main part of a disk reproducing apparatus according to a second embodiment of the invention, and Fig. 5B is a schematic cross sectional view of an R-dependence adjustment part in Fig. 5A.
Fig. 6 is a perspective view showing the structure of a main part of a conventional disk reproducing apparatus.

### BEST MODE FOR EMBODYING THE INVENTION

Disk reproducing apparatuses according to embodiments of the invention will be described with reference to the accompanying drawings.

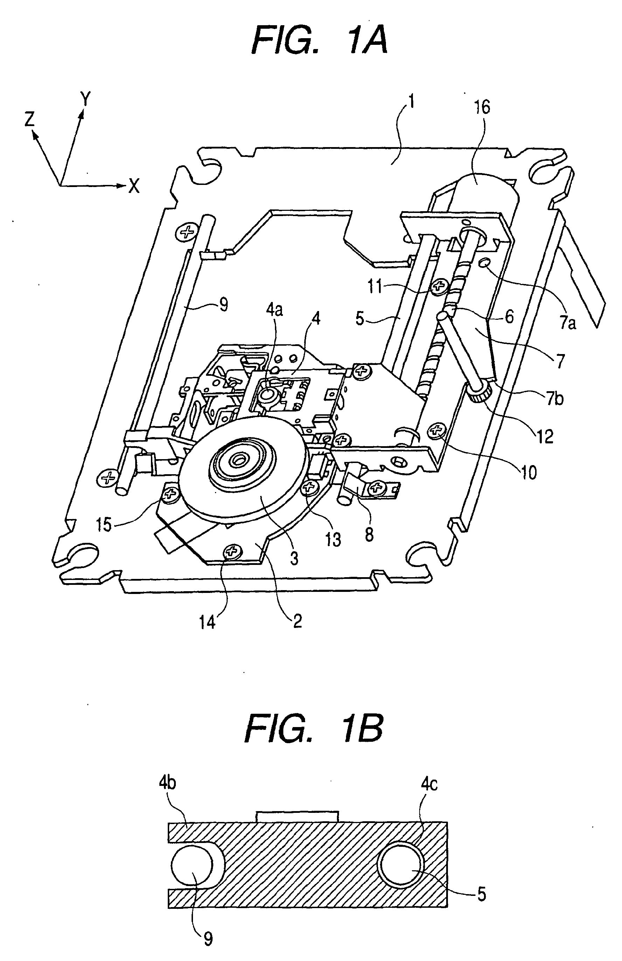

Fig. 1A is a perspective view showing the structure of a main part of a disk reproducing apparatus according to the embodiment. The disk reproducing apparatus shown in Fig. 1A has: a chassis 1; a bracket 2; a turntable 3; a pickup 4; a main rod 5; a lead screw 6; a holder 7; a plate spring 8; a sub-rod 9; R-dependence fixing screws 10 and 11, an adjusting jig gear 12; a bracket fixing screw 13, a radial skew adjusting screw 14: a tangential skew adjusting screw 15; and a thread motor 16.

The chassis 1 holds the turntable 3 via the bracket 2 and holds the pickup 4 via the holder 7. The chassis 1 is formed with thread holes through which the bracket fixing screw 13 and the like are threaded to hold the bracket 2, holder 7 and the like.

The bracket 2 is engaged with the chassis 1 by the bracket fixing screw 13. The bracket holds an unrepresented disk motor by using a mount plate. The rotary shaft of the disk motor supports the turntable 3.

The bracket 2 is fixed to the chassis 1 after the radial skew and tangential skew of the turntable 3 are adjusted by the radial skew adjusting screw 14 and tangential skew adjusting screw 15. The details of the radial skew and tangential skew will be later given.

The turntable 3 is coaxially supported by the disk motor held by the bracket 2. The turntable 3 is held by the chassis 1 via the bracket 2. The turntable 3 mounted with an unrepresented disc is driven and rotated by the disk motor.

The pickup 4 is supported movably along the Y-direction shown in Fig. 1A by the holder 7 and the like. As the lead screw 6 rotates, the pickup 4 is driven by a predetermined rack gear engaged with the pickup to reciprocally move on the main rod 5 and sub-rod 9.

The pickup 4 has an objective lens 4a and generates a laser beam. The laser beam is applied to a disk record surface via the objective lens 4a, and light reflected from the disk is converged to a predetermined light detector via the objective lens 4a. The pickup 4 is adjusted so as to make the optical axis of the objective lens 4a vertical to the record surface of a disk placed on the turntable 3. Namely, the optical axis of the objective lens 4a is adjusted by adjusting the inclination of the turntable 3 via the bracket 2 with the radial skew adjusting screw 14 and tangential skew adjusting screw 15.

The main rod 5 is fastended to the chassis 1 via a predetermined holder and the like and guides the motion of the pickup 4.

The lead screw 6 is coupled to the shaft of the thread motor 16 and rotated by the thread motor 16. The lead screw 6 engages with a predetermined rack gear mounted on the pickup 4 and makes the pickup 4 reciprocally move along the Y-direction as the lead screw 6 is rotated.

The holder 7 is supported by the chassis 1 rotatably along the X-Y plane by using the holder boss 7a as a fulcrum. The holder 7 is rotated as the adjustment jig gear 12 engaged with a rack gear part 7b is rotated. After the R-dependence is adjusted by the adjustment jig gear 12, the holder 7 is threaded with the chassis 1 by the R-dependence fixing screws 10 and 11 and the like. The details of the R-dependence will be given later.

The plate spring 8 is fixed to the chassis 1 by a predetermined fixing screw to push the main rod 8 along a predetermined direction so that the holder 7 and main rod 5 becomes in contact with each other. It is therefore possible to remove a play of the main rod 5. During the R-dependence adjustment, the holder 7 and main rod 5 can move in unison. In this embodiment, although the plate spring 8 is provided only at one end of the main rod 5 (in Fig. 1A, on the turntable 3 side), the plate spring 8 may be provided at both ends.

The sub-rod 9 is fixed to the chassis 1 by predetermined fixing screws and the like and movably supports the pickup 4 via its support parts 4b and 4c. The support part 4b has an elongated recess part (refer to Fig. 1B) through which the sub-rod 9 is inserted, and the support part 4c has a circle hole (refer to Fig. 1B) through which the main rod 5 is inserted. During the R-dependence adjustment, the axial direction of the main rod 5 is finely adjusted. Since the support part 4b can move slightly on the sub-rod 9 along the elongated recess part direction, both the rods 5 and 9 can be maintained in parallel. After the R-dependence adjustment, the pickup 4 can move on both the rods 5 and 9 along the disk radial direction.

The holder 7 is fixed to the chassis 1 by threading the R-dependence fixing screws 10 and 11 into thread holes formed in the chassis 1.

The adjustment jig gear 12 is a rotary gear which is supported by a predetermined rotary shaft mounted on the chassis 1 and engages with the rack gear part 7b of the holder 7. As the adjustment jig gear 12 is rotated, the holder 7 is rotated by using the holder boss 7a as a fulcrum.

The bracket fixing screw 13 is threaded into a thread hole formed in the chassis 1 to fix the bracket 2 to the chassis 1.

The radial skew adjusting screw 14 is threaded into a thread hole formed in the chassis 1, with the bracket 2, a predetermined coil spring and the like being squeezed therebetween, to fix the bracket 2 to the chassis 1 while a predetermined inclination angle of the turntable 3 in the radial direction (Y-direction) is maintained.

The tangential skew adjusting screw 15 is threaded into a thread hole formed in the chassis 1, with the bracket 2, predetermined coil spring and the like being squeezed therebetween, to fix the bracket 2 to the chassis 1 while a predetermined inclination angle of the turntable 3 in the tangential direction (X-direction) is maintained.

The thread motor 16 is fixed to the holder 7 by a predetermined fixing screw and the like and rotates the lead screw 6 coupled to the rotary shaft of the thread motor 16.

The operation of the disk reproducing apparatus according to the embodiment of the invention will be described with reference to the accompanying drawings.

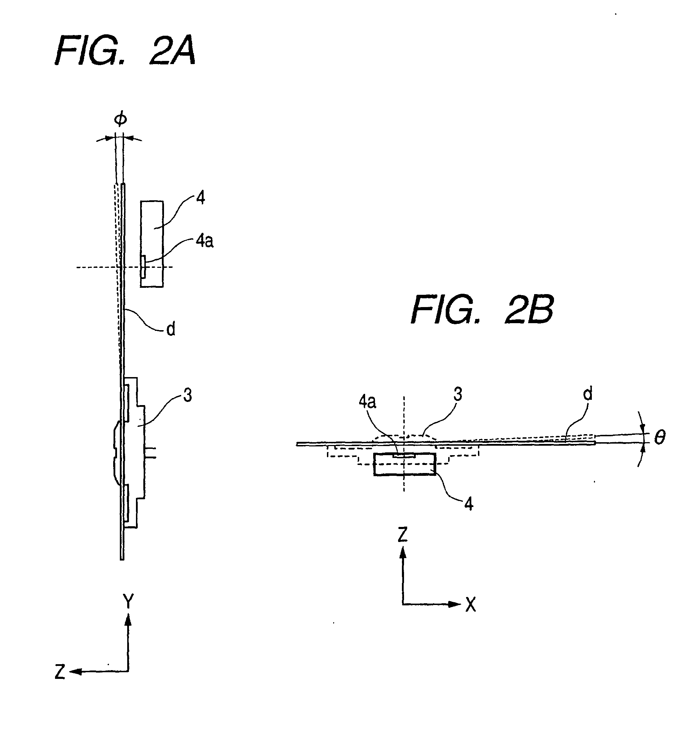

First, the adjustment of radial and tangential skews of the turntable 3 will be described with reference to Figs. 2A and 2B. Fig. 2A is a side view in the Y-Z plane of the turntable 3 and the like illustrating the radial skew adjustment. Fig. 2B is a side view in the X-Z plane of the turntable 3 and the like illustrating the tangential skew adjustment.

As described earlier, it is necessary that the optical axis of the objective lens 4a of the pickup 4 of the disk reproducing apparatus should be adjusted so as to be vertical to the record surface of a disk d placed on the turntable 3. In the embodiment, the inclination of the turntable 3 is adjusted to adjust the optical axis of the objective lens 4a.

More specifically, as shown in Figs. 2A and 2B, the inclination angles of the turntable 3 along the radial and tangential directions are adjusted in order to make the optical axis of the objective lens 4a vertical to the record surface of the disk d.

Namely, while the radial skew adjusting screw 14 is threaded into the thread hole formed in the chassis 1, with the bracket 2, predetermined coil spring and the like being squeezed therebetween, the rotation degree of the radial skew adjusting screw 14 is adjusted to adjust the radial skew. Similarly, the rotation degree of the tangential skew adjusting screw 15 is adjusted to adjust the tangential skew.

As shown in Fig. 2A, in adjusting the radial skew, the radial skew adjusting screw 14 is rotated so that a displacement φ of the radial skew of the turntable 3 along the radial direction (Y-direction) can be removed. As shown in Fig. 2B, in adjusting the tangential skew, the tangential skew adjusting screw 15 is rotated so that a displacement 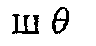 of the tangential skew of the turntable 3 along the tangential direction (X-direction) can be removed.

By the adjustments by the radial skew adjusting screw 14 and tangential skew adjusting screw 15, the optical axis of the objective lens 4a can be made vertical to the record surface of a disk.

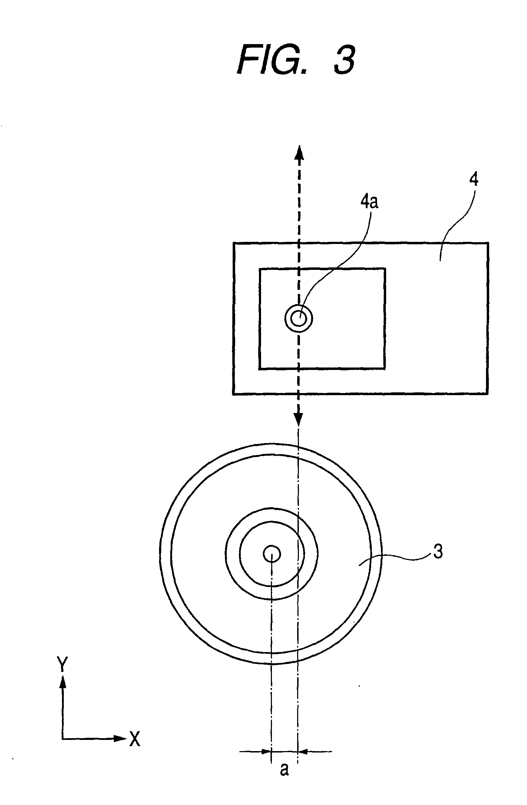

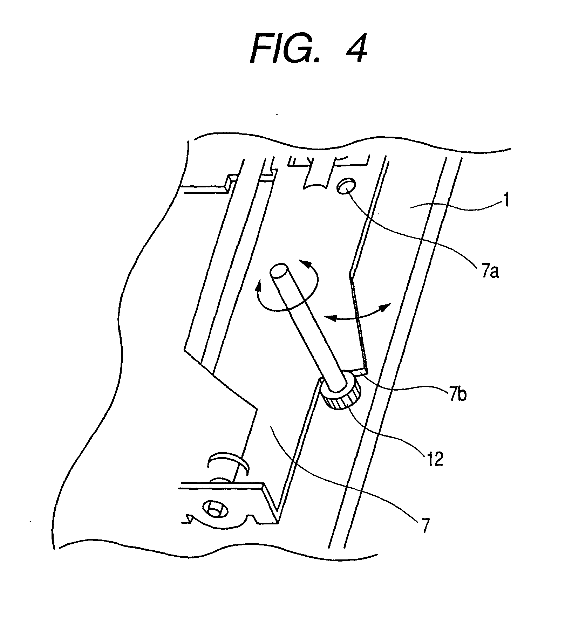

Next, the adjustment of the R-dependence will be described with reference to Figs. 3 and 4. Fig. 3 is a schematic diagram illustrating the R-dependence. Fig. 4 is a schematic diagram illustrating how the holder 7 is rotated by rotating the adjustment jig gear 12.

As described earlier, it is necessary that the center of the turntable 3 is positioned on the extended line of the motion locus of the optical axis of the objective lens 4a. In the embodiment of the invention, the inclination of the holder 7 which rotates on the chassis 1 in the plane (X-Y plane) by using the holder boss 7a as a fulcrum, is adjusted to adjust the position of the motion locus of the optical axis of the objective lens 4a.

In adjusting the position of the motion locus of the optical axis of the objective lens 4a, as shown in Fig. 3 the pickup 4 is moved in the X-Y plane in such a manner that the R-dependence displacement a is removed, the R-dependence displacement being a displacement of the center of the turntable 3 from the motion locus (on the extended line) of the optical axis of the objective lens 4a. More specifically, as shown in Fig. 4, as the adjustment jig gear 12 is rotated, the holder 7 engaged with the adjustment jig gear 12 via the rack gear part 7b rotates about the holder boss 7a. As the holder 7 is rotated, the pickup 4 supported by the holder 7 moves to adjust the R-dependence.

Namely, by the adjustment by the adjustment jig gear 12, it is possible to adjust so that the center of the turntable 3 is superposed upon the extended line of the motion locus of the optical axis of the objective lens 4a.

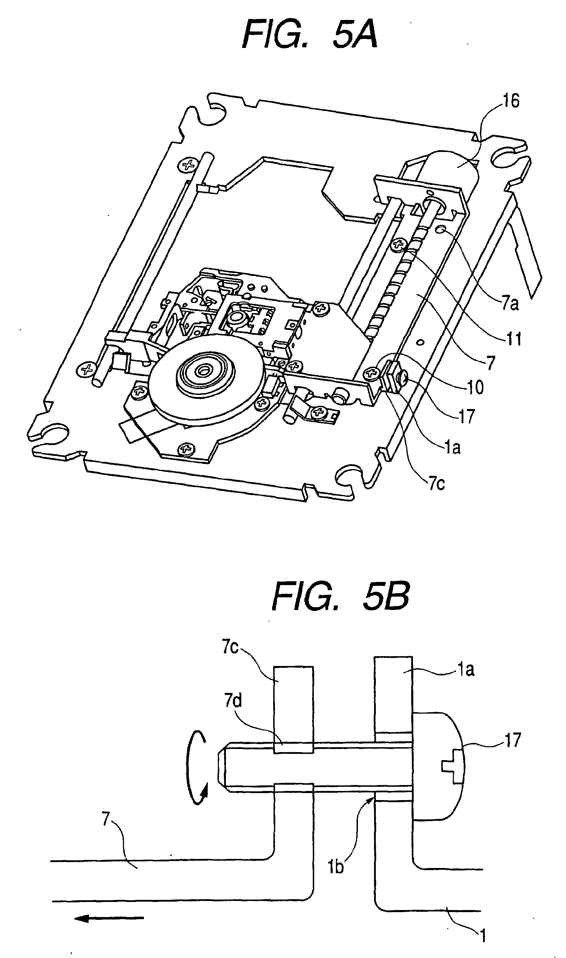

The R-dependence adjustment according to a second embodiment will be described with reference to Figs. 5A and 5B.

Figs. 5A and 5B are diagrams illustrating the embodiment in which an R-dependence adjustment screw 17 is rotated to rotate the holder 7 and adjust the R-dependence. Some reference numerals of the elements having the same structures as those shown in Fig. 1A are omitted.

Referring to Fig. 5A, a projection 1a is integrally formed with the chassis 1. The projection 1a is formed with a hole 1b (refer to Fig. 5B) having a diameter slightly larger than the diameter of a screw part 17a of the R-dependence adjustment screw 17. A projection 7c is integrally formed with the holder 7 at the position corresponding to the projection 1a of the chassis 1. This projection 7c is formed with a thread hole 7d (refer to Fig. 5B). The R-dependence adjustment screw 17 is inserted through the hole 1b of the projection 1a and threaded into the thread hole 7d of the projection 7c.

In adjusting the R-dependence, the R-dependence adjustment screw 17 is rotated right and left to rotate the holder 7 concentrically with the holder boss 7a. As the holder 7 is rotated, the pickup 4 supported by the holder 7 moves to adjust the R-dependence. In both the first and second embodiments, after the R-dependence adjustment, the holder 7 is fixed to the chassis 1 by the R-dependence fixing screws 10 and 11 to make the holder unmovable.

In each of the embodiments of the invention, as the holder 7 is rotated, the main rod 5, lead screw 6 and thread motor 16 move so that no problem occurs in driving the pickup 4.

According to the invention, since the skew adjustment and R-dependence adjustment are performed at independent positions (bracket 2 and holder 7), the adjustments are not influenced on each other. It is therefore easy to adjust the inclination angle of the objective lens and the position of the motion locus of the optical axis of an objective lens.

The adjustment mechanism is simple so that the area near the bracket 2 (disk motor) can be simplified which otherwise becomes complicated.

Since the R-dependence adjustment is performed by using the holder 7, the distance between the holder boss 7a as the fulcrum and the rack gear part 7b can be set sufficiently long, fine adjustment of the rotation of the holder 7 is easy and displacement after the adjustment is hard to be generated.

As described so far, with the disk reproducing apparatus of the invention, the inclination angle of the objective lens and the position of the motion locus of the optical axis of an objective lens can be adjusted easily.

In the above embodiments, although the pickup 4 is reciprocally moved by the lead screw 6, any motion method for the pickup may be used. For example, the pickup may be reciprocally moved by using a rack gear on the pickup side and a rotary gear on the driving side.

### INDUSTRIAL APPLICABILITY

As described above, according to the invention, the inclination angle of the objective lens and the position of the motion locus of the optical axis of an objective lens can be adjusted easily.

## Claims

1. A disk reproducing apparatus comprising:
a first holder (2) mounted on a chassis (1) for holding a drive motor whose rotary shaft is coupled to a turntable (3) on which a disk (d) is placed;
first inclination adjusting means for adjusting an inclination of the turntable coupled to the rotary shaft of the drive motor held by said first holder, along a first direction relative to the chassis;
second inclination adjusting means for adjusting an inclination of the turntable along a second direction different from the first direction;
a second holder (7) mounted on the chassis for movably supporting a pickup (4); and
third inclination adjusting means for adjusting an inclination of the pickup supported by said second holder, along a direction in a plane (X-Y plane) of the chassis.

2. A disk reproducing apparatus according to claim 1, wherein said first and second holders are independently mounted on the chassis.

3. A disk reproducing apparatus according to claim 1, wherein:
said first inclination adjusting means includes a radial skew adjusting screw (14) for fixing said first holder to the chassis in an adjusted state of a radial skew of the turntable; and
said second inclination adjusting means includes a tangential skew adjusting screw (15) for fixing said first holder to the chassis in an adjusted state of a tangential skew of the turntable.

4. A disk reproducing apparatus according to claim 1, wherein:
said second holder further comprises guiding means for guiding a motion of the pickup along a predetermined direction and pickup moving means for moving the pickup along said guiding means; and
said third inclination adjusting means adjusts an inclination of the pickup in cooperation with said guiding means and said pickup moving means.

5. A disk reproducing apparatus according to claim 1, wherein said third inclination adjusting means includes an R-dependence adjustment gear (12) engaging with a rack gear (7b) formed on said second holder, in a state that the center of the turntable is superposed upon an extended line of a motion locus of an optical axis of the pickup.

6. A disk reproducing apparatus according to claim 4, wherein:
said guiding means includes rods (5, 9) for guiding a linear reciprocal motion of the pickup; and
said pickup moving means includes a drive motor (16) and a lead screw (6) coupled to a rotary shaft of the drive motor and engaged with a rack gear mounted on the pickup.

7. A disk reproducing apparatus according to claim 1,
wherein said third inclination adjusting means includes an R-dependence adjustment gear (17) engaging with a projection (7c) disposed on said second holder at a predetermined position, in a state that the center of the turntable is superposed upon an extended line of a motion locus of an optical axis of the pickup.
